# EUROPEAN PATENT SPECIFICATION

(11) **EP 1 262 090 B1**
(45) Date of publication and mention of the grant of the patent: **06.04.2011**
(21) Application number: 01909853.2
(22) Date of filing: 13.02.2001
(51) Int. Cl.: H05B 41/14, H02J 3/01

(54) **LIGHTING SYSTEM**
BELEUCHTUNGSSYSTEM
SYSTEME D'ECLAIRAGE

(30) Priority: 15.02.2000 FI 20000331
(43) Date of publication of application: 04.12.2002
(73) Proprietor: Saikka, Tapani Martti Sakari, 48700 Kyminlinna (FI)
(72) Inventor: Saikka, Tapani Martti Sakari, 48700 Kyminlinna (FI)
(74) Representative: Tiilikainen, Jarkko Tapio
(86) International application number: PCT/FI2001/000132
(87) International publication number: WO 2001/062052

(56) References cited:
- EP-A2- 0 239 278
- US-A- 4 415 839
- US-A- 4 808 887

## Description

The invention relates to a lighting system according to the preamble of Claim 1.

In particular, the invention relates to a three-phase lighting system.

Such lighting systems are used for lighting up large targets such as industrial facilities or production premises, or public buildings. Typically, the lighting in such spaces is provided by means of discharge lamps because they are more economical than glow bulbs. However, discharge lamps give rise to a reactive load which must be compensated to reduce the consumption of reactive power.

In the prior art, both centralized and distributed compensation has been used for the compensation of the reactive power of a discharge lamp system. In centralized compensation, the compensation of reactive power has been performed for the entire lighting system by means of a shared compensation unit which is connected in parallel with the groups of light fittings. The compensation unit has been provided with capacitors for the compensation of the reactive load of the light fittings of the entire system. In distributed compensation, then, the compensating capacitors are arranged in connection with the light fittings, i.e. the lighting system contains numerous small compensating capacitors. Today, distributed compensation is mainly used instead of the previously used centralized compensation, because the distributed system has enabled a reduction in the system's line losses. The reduction in line losses has been due to the fact that it has not been necessary to transfer the reactive power between the lamps and the compensating unit via group supply lines. A distributed solution requires less group supply line.

On the other hand, a centralized compensation solution also has its advantages. A centralized solution has offered a possibility to regulate and optimize the compensation. This has enabled a desired setting of reactive power consumption. In distributed compensation, this has not been possible in practice. In addition, a problem hampering distributed solutions lies in the fact that the wear and breaking down of compensating capacitors is usually not detected because proper monitoring thereof is difficult and is indeed usually not even considered important. In due course, this results in deteriorated compensation and an increase in the consumption of reactive power. In lamp-specific compensation, the capacitor may also resonate in the parallel- and/or series-resonant circuit of the previous network. This increases the harmonic distortion in the network; and capacitors, group supply lines and other pieces of equipment are loaded in a detrimental manner.

One previously known centralized compensation solution is described in Application Publication EP 0 239 278 by Kabushiki Kaisha Toshiba. The solution described in the publication enables the compensation of a variable reactive load. However, the arrangement is extremely complicated and therefore too costly for most lighting targets. In a centralized solution line losses are increased, too, or alternatively, the group supply lines must be dimensioned thicker which of course increases the total cost of the system.

IEE PROCEEDINGS: GENERATION, TRANSMISSSION AND DISTRIBUTION, Vol. 145, No.4, Pages 363-368, published on 15 July 1998, discloses reduction of harmonic currents generated by discharge lamp systems. The main idea is to install in the neutral conductor a filter that attenuates higher harmonic components of the neutral current.

DE / DER ELEKTROMEISTER + DEUTCHES ELEKTROHANDWERK, HUETHIG UND PFLAUM VERLAG, MUNICH, Pages 399-404, published on March 1979, discloses a cabin for a switching system.

The invention aims at providing an entirely novel type of lighting system which allows the use of a cost-efficient structure to improve the efficiency of a lighting system in comparison to prior art systems making use of centralized compensation as well as systems with distributed compensation.

The invention is based on the concept of dividing the lighting system into at least two parallel parts whereby the reactive load of both parts is compensated in a centralized manner by means of separate compensating units for each lighting section. What is more, the lighting system is provided with third harmonic filtering equipment which is used to filter the third harmonic from the neutral wire of the lighting system.

In more detail the lighting system according to the invention is characterized by what is stated in the characterizing part of Claim 1.

According to the invention the lighting system may also be designed in a modular fashion, thus achieving considerable savings in both design and production costs. Based on this modular concept a centralized equipment cabin is created for the lighting system, which can be used to house the compensation equipment and the like.

The invention offers considerable benefits.

By furnishing the lighting system with third harmonic filters (THF) in addition to centralized compensation it is possible to reduce the load on the group supply lines and apparatuses of the lighting system, thereby increasing the efficiency of the lighting system. The improved efficiency of a group of light fittings when centralized compensation and a third harmonic filter are used has already been described in a report by Eino Tetri entitled "Effect of third harmonic filter on photometric and electrical characteristics of a 400 W high pressure sodium lamps", Lighting Laboratory, Helsinki University of Technology, 1997. According to the report, the luminous flux and radiant power of the group of luminaires, increased by 6 to 8 % when the THF was connected if there was no compensation or the compensation was carried out in a centralized manner. In luminaire-specific compensation, then, the THF reduced illuminance by 2 to 3 %.

Considerable benefits are achieved when a lighting system is divided into at least two parts in accordance with the invention, whereby said parts are termed lighting sections in the present application. This is because such a solution may be used in the implementation of even extensive lighting systems in a cost-efficient manner by assembling the system from standard components. Hereby regulating devices for the compensating units, separate short circuit protection or separate connection contactors are not necessarily needed either, because the compensating units are automatically connected in parallel with a lamp load of correct magnitude.

All in all, by means of the lighting system of the invention, it is possible to achieve energy savings of even 8 to 10 % compared to conventional lighting systems.

The divided system according to the invention further renders several embodiments possible which may then be used to achieve considerable additional benefits.

In a divided system, e.g. a multi-stage switching on is simple to implement. Thereby the current supply is connected to each of the lighting sections at a separate point in time when switching on the lighting system, which allows a considerable decrease in the connection peak of the entire system. The decreased connection peak is of advantage e.g. in that the main switch, conductors and THF filter can be dimensioned smaller.

By means of an ingenious connection it is also possible to implement a partial lighting function in a divided system without adding wiring. In this connection the supplies to some of the phases of some groups of light fittings are changed such that they are provided from the other lighting section whereby the neutral wires of the light fitting group are taken to the lighting section which mainly supplies the area of the group of light fittings. In conventional systems, partial lighting has required that all stages in the partial lighting be provided with wiring of their own. In this application even partial lighting may be carried out using the same group supply lines as for full lighting, and no separate group supply lines are required for the stages of partial lighting, as is the case in prior art solutions.

In modularly implemented embodiments of the system even the time required for system design is essentially reduced, thereby achieving savings in the total costs.

In the following, the invention is described by means of working examples and with reference to the annexed drawings.
Figure 1 is a block diagram of a lighting system according to the invention.
Figure 2 is a block diagram of the equipment cabin of a lighting system according to the invention, said cabin being furnished with a partial lighting connection.
Figure 3 is a block diagram of the equipment cabin of another lighting system according to the invention, the system being furnished with a partial lighting connection.
Figure 4 depicts the principle of a possible phase connection of the lighting system of Figure 3.
Figure 5 depicts the principle of another possible phase connection of the lighting system of Figure 3.

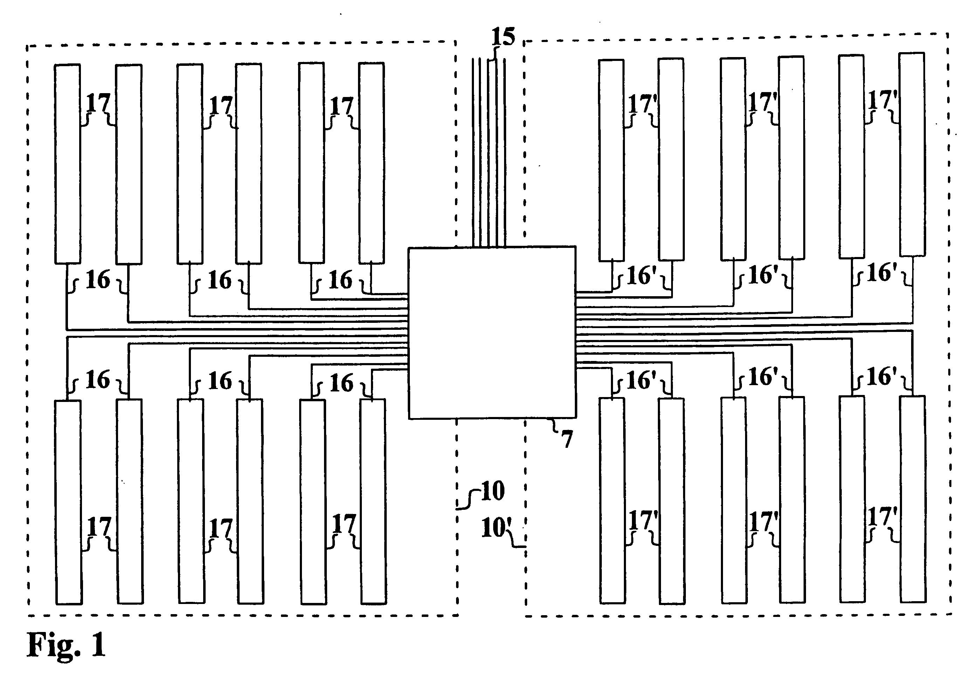

The lighting system of Figure 1 comprises two lighting sections 10 and 10'. The lighting sections 10 and 10' contain the groups 17, 17' of light fittings with discharge lamps, and group supply lines 16, 16' for supplying electricity to the light fitting groups 17, 17'. The supply of the group supply lines 16, 16' is connected to the equipment cabin 7 which contains the equipment required for the supply, control and compensation of the groups 17, 17' of light fittings. Applicable parts of this equipment arranged inside the equipment cabin 7 are also considered part of the lighting sections 10 and 10'. In addition, the Figure depicts a current supply line 15 through which the energy supply to the lighting system is provided.

The groups 17, 17' of light fittings in Figure 1 contain discharge lamps which are typically evenly divided between three phases (L1, L2, L3). The group supply lines 16, 16' supplying the light fitting groups 17, 17' for their part contain conductors for each phase (L1, L2, L3) as well as a neutral wire (N) and a protective earth conductor (PE). Even the supply lines 15 are usually provided with the corresponding conductors.

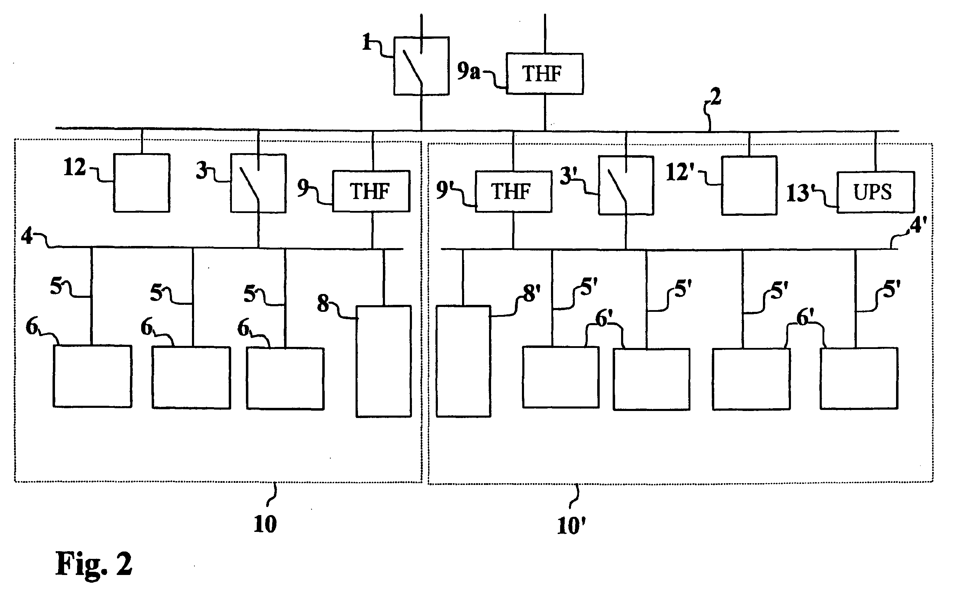

Figure 2 depicts main circuit breaker equipment 1 over which the lighting system is connected to the electric network. The main circuit breaker equipment 1 typically comprises the main fuse elements of the system as well as the switches between the supplier circuit and the supplied circuit. In the present example, a three-phase lighting system is examined, whereby the main circuit breaker equipment 1 includes separate main fuse elements and switches for each of the three phases. The Figure further depicts a lighting system supply line 2 comprising phase conductors (L1, L2, L3) and a neutral wire (N) and a protective earth conductor (PE). The purpose of the supply line 2 is to supply electric current to all lighting sections 10, 10' in the lighting system. The example depicted in the Figure has two lighting sections 10, 10'.

In the example of Figure 2, each lighting section 10, 10' comprises switching means 3, 3' of its own for connecting the lighting section 10, 10' to the supply line 2. The current distributor wires 4, 4' of lighting section 10, 10' are connected to the switching means 3, 3', said wires being used for connecting in parallel certain components of the lighting section 10, 10'. Such components connected in parallel to the current distributor wires 4, 4' include e.g. wire protection means 6, 6' for the group supply lines 16, 16' of the groups 17, 17' of light fittings, which protection means are connected to the current distributor wires 4, 4' over rising conductors 5, 5', as well as a compensating unit 8, 8'. The compensating unit 8, 8' contains compensating capacitors by means of which the reactive power of the discharge lamps in the lighting section 10, 10' is compensated in a centralized manner. The compensating capacitors may be connected e.g. over a delta connection. In addition to the phase conductors, the current distributor wires 4, 4' include a neutral wire (N) and a protective earth conductor (PE).

Figure 2 also depicts control means 12, 12' for the system, connected to the supply line 2. Due to this arrangement, the control voltage is not disconnected when the switching means 3, 3' are opened. The Figure also depicts a UPS device 13' which is used for ensuring current input and can be connected to the system if need be. Generally speaking, such components of the system are connected to the supply line 2 whose voltage must not be disconnected while the switching means 3, 3' are open. Such components include e.g. the control voltage, THF control, and the UPS.

Figure 2 further depicts a third harmonic filter (THF) 9, 9' connected to the neutral wire between the current distributor wires 4, 4' of the lighting section 10, 10' and the supply line 2. The purpose of the TH filter 9, 9' is to filter off the current propagating from the neutral wire of the lighting system at the third harmonic frequency, thus improving the efficiency of the lighting system. Thus, in an alternating voltage network with a 50 Hz frequency this means that the current propagating at a frequency of 150 Hz is filtered off. Consequently, the THF is a bandstop filter tuned to the third harmonic frequency of an electric network. A particularly preferred solution for implementing third harmonic filtration in connection with the present invention has been described in Application Publication EP 0 684 679 A1 by ABB Strömberg Kojeet Oy.

A second alternative for arranging third harmonic filtration is to fit the THF between the supply line 2 neutral wire and the electric network parallel to the main circuit breaker equipment 1. Such an alternative is illustrated in Figure 2 by the aid of the third harmonic filter (THF) 9a. When the THF 9a is used, the lighting-section-specific TH filters 9, 9' may naturally be omitted. Such an arrangement may prove the most practical solution in some applications. As a rule, however, it is of advantage in the context of the present invention to arrange the TH filters in a distributed manner between each lighting section 10, 10' and the supply line 2 neutral wire, as this allows the construction of the filtering system using compact and cost-efficient third harmonic filter modules 9, 9'.

An essential feature of the lighting system of Figure 1 lies in the fact that the lighting system is divided into two lighting sections 10, 10' of largely independent function. This division materializes the modular principle of the invention which makes it possible to significantly reduce the costs of the system. In a larger modular implementation, the lighting sections 10, 10' may naturally be more than two in number. A further central feature of a modular implementation lies in the fact that a separate compensating unit 8, 8' is provided for each lighting section 10, 10'.

The modular construction of the lighting system and the division thereof into separate lighting sections 10, 10' also enable advantageous embodiments. By means of these embodiments it is possible to achieve further cost savings and/or to provide the lighting system with useful further features. One such advantageous further feature is constituted by a multi-stage switching on of the lighting sections 10, 10'.

A multi-stage switching on of the lighting section 10, 10' entails that when the lighting is being switched on the lighting system connects the voltage to each of the lighting sections 10, 10' one at a time after a delay interval. Such a feature provides considerable benefits, as there is a significant peak current involved in the switching on of discharge lamps. The switching on of the lighting sections 10, 10' is timed such that the second lighting section 10' is not connected until the switching peak of the first connected lighting section 10 is already evening out. A corresponding procedure is used in the switching on of each one of the lighting sections 10' to be switched on subsequently. The multi-stage switching on achieves the considerable benefit that a diminished switching current peak allows a smaller dimensioning of the main circuit breaker equipment 1, the supply lines 2 and the third harmonic filters (THF) 9, 9', 9a. This also leads to cost savings. Further cost savings are achieved if even the current distributor wires 4, 4' and other applicable components are dimensioned in compliance with the reduced switching current. This is feasible when a partial lighting connection is used. The technical implementation of a multi-stage switching on can be carried out e.g. by means of a time-delay relay connection, which is used to implement the delayed switching on of the switches 3, 3'. The delay is designed to suit each system. The typical suitable delay time varies between 5 s and 3 min. Generally speaking, a longer delay period is always more certain from the point of view of electrotechnical dimensioning.

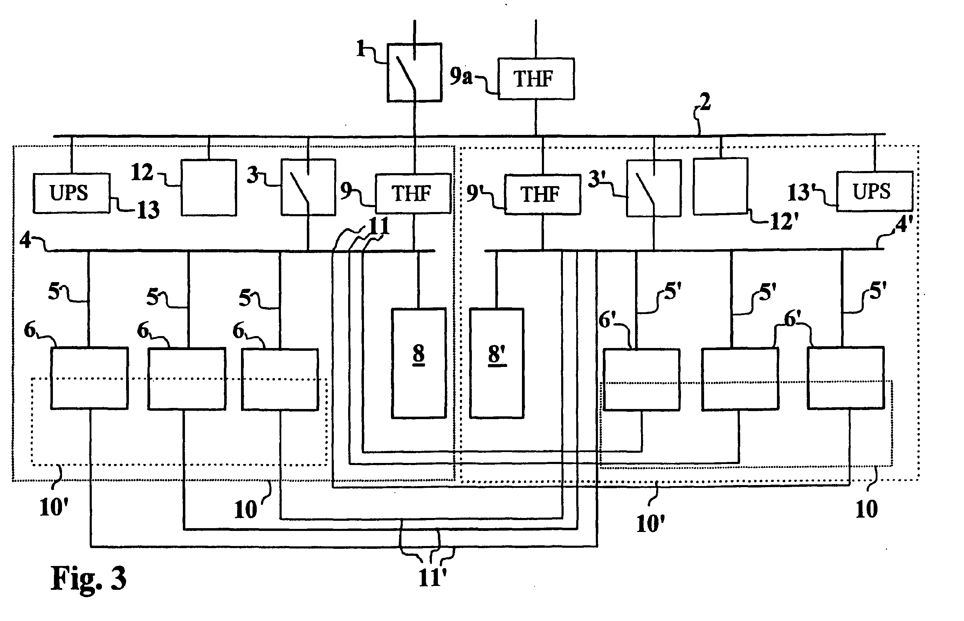

Another advantageous additional feature is the partial lighting connection. A partial lighting connection is a connection which enables the switching on of lighting in two or more parts such that the connection can be used to affect the illuminance of each lit target in a stepwise fashion. One special type of a partial lighting connection is the dim-light connection. In a dim-light connection, it is possible to optionally switch on about half of or all the lamps used to light up each target to be lit up. In a lighting system according to our invention, a partial lighting connection such as a dim-light connection can be implemented in a preferred manner such that the supply lines (risers 5, 5') of the wire protection means 6, 6' of the groups 17, 17' of light fittings are connected by phase across between the lighting sections 10, 10'. The principle of such a connection is described in Figure 3.

The lighting system of Figure 3 differs from that depicted in Figure 2 in that in the system of Figure 3, a partial lighting system has been implemented by means of conductors 11, 11'. The conductors 11 take the voltage supply from the phase advances of the current distributor wires 4 to some discharge lamps supplied over the wire protection means 6'. The conductors 11' for their part take the voltage supply from the phase advances of the current distributor wire 4' to some discharge lamps supplied over the wire protection means 6. The neutral wires 6 of the wire protection means (i.e. the neutrals of the group supply lines 16) can, however, be connected to the neutral wire of the current distributor wire 4 of their own lighting section 10 only, and the neutrals of the wire protection means 6' can be connected to the neutral of the current distributor wires 4' of the lighting section 10'. The cross-connection of the neutral wires (N) is thus not necessarily required. This makes it possible to implement partial lighting by means of considerably simpler wiring than that required for conventional solutions. Also the need for contactors and light fitting group supply lines 16, 16' is reduced with regard to previously known solutions.

A partial lighting connection is also excellently suited for use with the above-described multi-stage switching on. This achieves the benefit that already in the first stage of the switching on, a given partial lighting can be obtained for the entire area to be lit up. Accordingly, e.g. in the case of three lighting sections 10, 10', the system can be designed for instance such that during the first stage of the switching on, all lamps in one phase of all groups 17, 17' of light fittings (one third of the lamps) are lit and subsequently, e.g. in the groups of light fittings of the first lighting section 10, the second phases are lit, and full lighting in the second lighting section 10'. The rest of the lamps, i.e. the remaining third of the lamps in the first lighting section and the remaining two thirds of the lamps in the third lighting section, would then be lit in the third stage of the switching on.

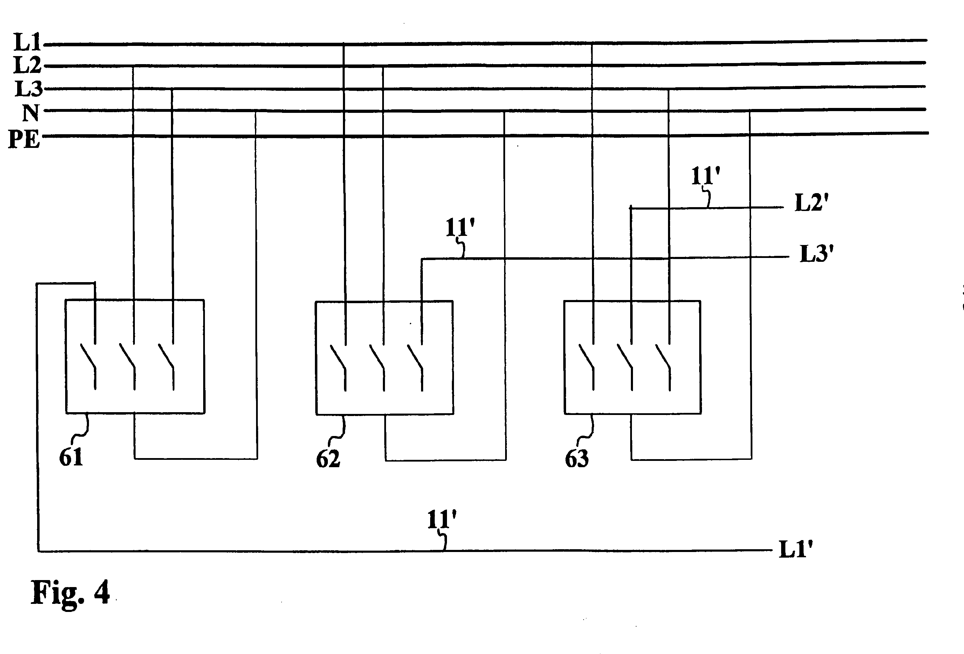

Figure 4 depicts the parts on the side of the first lighting section 10 of a feasible partial lighting connection used in connection with the system of Figure 3. In this wiring, of the wire protection means 6 of the groups 17 of light fittings, the first-phase supply of the wire protection means 61 of the first group of light fittings is connected to the first phase L1' of the second lighting section 10' instead of the first phase L1 of the first lighting section 10 by means of a conductor 11'. In a corresponding manner, the third phase of the wire protection means 62 of the second group of light fittings is connected to the third phase L3' of the second lighting section 10', and the second phase of the wire protection means 63 of the third group of light fittings to the phase L2'. In such an arrangement, a corresponding connection is performed in the second lighting section 10', which may be e.g. a mirror image of the wiring of Figure 4. What is important in connecting across the lighting sections 10, 10' is that the cross-connection must not affect the symmetry of the load on the lighting system. This can be ensured e.g. by implementing the wiring such that each time load from another lighting section is added to the supply to a lighting section 10, 10', the corresponding load is transferred from the area of the lighting section 10, 10' in question to be supplied by some other lighting section.

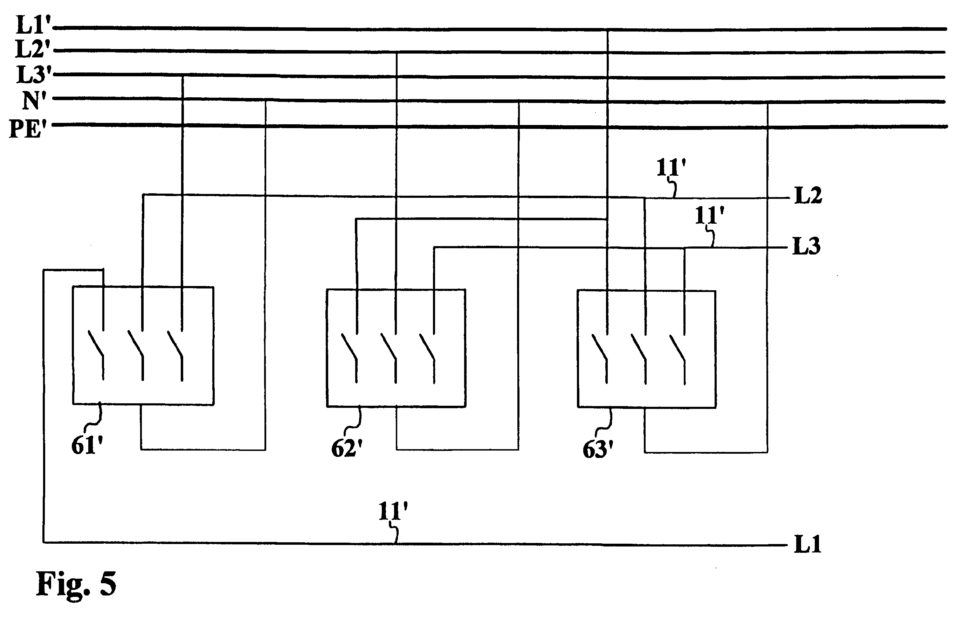

Figure 5, then, depicts the elements on the side of the second lighting section 10' of a second possible partial lighting wiring used in connection with the system of Figure 3. By suitably performing a parallel connection of the groups of Figure 4, a dim-light connection can be carried out. In the wiring of Figure 4, the lamps in each of the phases of the wire protection means 61', 62', 63' of the groups of light fittings are connected to the supplies to the lighting sections such that one phase of the wire protection means 61', 62', 63' of each group of light fittings is supplied from the lighting section 10 or 10' and the remaining two phases correspondingly from the second lighting section 10' or 10.

Figures 4 and 5 depict the wiring with three groups of light fittings 17, 17'. In most cases, however, more than three groups of light fittings are required. Hereby units in accordance with Figures 4 and 5 or similar thereto are connected in parallel to the lighting section 10, 10'. Thus, the modular principle may be applied even in the design of the lighting sections 10, 10'.

In an embodiment of the invention where a partial lighting connection and/or multi-stage switching is used, the significant benefit provided by a modular construction emerges clearly that even the compensation of the lighting is connected with the lighting sections 10, 10' being switched on in the system according to the invention. Thus, in neither case are variable capacitors required; instead, even the compensation of this variable load can by arranged by means of essentially cheaper fixed-magnitude capacitors. Consequently, no separate connectors or regulating elements are required for the capacitors.

The lighting system of the present invention provides the greatest practical advantage when the system is constructed on a modular basis and in addition such that all or almost all of the modules and equipment with the exception of the light fittings 17, 17' and the group supply lines 16 , 16' thereof are arranged in one centralized equipment cabin. This reduces the space required by the lighting system, as the switching, compensating and monitoring equipment as well as other elements can be arranged inside one supporting structure in a compact manner. Hereby even the length of wiring between these elements is reduced. Perhaps the most significant advantage, however, lies in the facilitated installation and service. As all the equipment requiring service, with the exception of the lamps, is arranged in the equipment cabin in a centralized manner, the inspection and service of the entire system can be performed at one location. It is known that in prior art solutions the equipment is scattered around the target being illuminated, whereby some elements of the lighting system are easily ignored altogether during maintenance work and when broken, give rise to operating trouble incurring considerable energy costs in the long run.

The equipment cabin can also be constructed by combining cabin modules designed for each lighting section in one equipment cabin.

Thus, such an equipment cabin contains the equipment cabin structure and the lighting system equipment arranged inside. In addition, the equipment cabin comprises connection means for connecting the equipment cabin to the supplying network and to the group supply lines 16, 16' of the groups 17, 17' of light fittings being supplied. If required, it is also possible to provide the equipment cabin with e.g. telephone connections or other datacommunications connections to connect the equipment cabin to a remote monitoring system and/or a remote control system. In particular, the equipment cabin contains compensating units 8, 8' for compensating the reactive power caused by each of the lighting sections 10, 10' connected to the equipment cabin. The compensating units 8, 8' in turn contain capacitors, which in the solution according to the present invention may advantageously also be constituted by invariable capacitors. Hereby the compensating units 8, 8' may additionally be furnished with fuse guards which can be used to monitor the operation of the capacitors even more efficiently.

Further in an advantageous embodiment, at least one third harmonic filter unit 9, 9', 9a is fitted into the equipment cabin for each lighting section 10, 10' of the lighting system. In order to ensure reasonable operation of the system even in the case of a third harmonic filter 9, 9', 9a failure, the equipment cabin is further advantageously provided with monitoring means for monitoring the operation of the filter units 9, 9', 9a. Shunt switching means may also be connected under the control of the monitoring means, by means of which it is possible to shunt the filter 9, 9', 9a in case of failure.

Should the lighting system be provided with multi-stage switching on, the equipment required by the multi-stage system is preferably arranged in the same equipment cabin. Hereby the switches 3, 3' of the lighting sections 10, 10', also arranged in the equipment cabin, are controlled e.g. via a time-delay relay.

Thus, the lighting system can be designed modular such that it comprises a main supply and metering module, a control module, compensating modules, third harmonic filter (THF) modules, and THF monitoring modules. The main supply and metering module then comprises the main circuit breaker equipment 1, the main fuses and the lighting distribution modules with supply contactors 3. The main supply and metering module may also be provided with energy meters for purchased energy which are preferably provided with auxiliary contactors for the monitoring device. A pulse output can be programmed into the monitoring device, which alerts the user if there is a reactive current towards the supplying electric network. In this manner it is possible to detect such a malfunction in the lighting system in time which otherwise would incur considerable reactive power costs. A module which can be read by telephone may also be connected to the main supply and metering module, whereby it is possible to observe the reactive power balance and monitor compensation functionality and adequacy. The main supply and metering module also comprises the outputs required for supplying the lighting sections 10, 10'.

The control module 12, 12' may be provided with a selector switch for selecting manual or automatic control. The control module 12, 12' further contains the THF monitoring and control module with monitoring and shunt switching means for the TH filter 9, 9', 9a and control means for controlling the operation of the supply contactors 3, 3' of the lighting sections 10, 10'. The TH filters 9, 9', 9a themselves are arranged in the TH filter module. The control module 12, 12' is further equipped with control voltage wire protection and a supplementary relay. A firing delay time may be set for the supplementary relay, whereby a multi-stage switching on may be implemented. The compensating module for its part contains a capacitor battery and if required, block coils tuned below the third harmonic.

A partial switching-on of the groups 17, 17' of light fittings can also be added to the modular structure. In this wiring, as few as two lighting modules can be used to obtain either dim or full lighting by means of one three-phase group supply line 16, 16' per each row 17, 17' of light fittings. The cross-connection is carried out prior to the wire protection devices 6, 6' or to the terminals on their input side. The terminals on the output side of the wire protection automates 6, 6' are reserved for the supply lines (group supply lines 16, 16') of the groups 17, 17' of light fittings.

Even solutions differing from what is described above are feasible within the scope of the invention.

Above, the operation of the invention has been described in connection with a three-phase lighting system. However, the implementation of the invention is not expressly restricted to a three-phase lighting system; instead, the same inventive concepts and characteristics can be applied even in systems other than three-phase ones.

In addition, many kinds of extra equipment can be added to the lighting system described above. The lighting system can e.g. be provided with a provisional lighting function which ensures the uninterrupted function of certain light fittings, e.g. exit lights and selected safety lamps, even during a temporary power failure. Such a function may be implemented e.g. by arranging UPS equipment in the equipment cabin or in conjunction therewith for ensuring power supply to the exit lights and safety lamps. The power supply to the exit lights and safety lamps may be implemented as a separate module in the equipment cabin by incorporating therein the wiring and devices needed for connecting the UPS equipment to the lighting system. Supply cables are run from the equipment cabin to the UPS device and back. Front elements for the group supply lines are also arranged in the equipment cabin for each group of exit lights and safety lamps.

If necessary from the point of view of the short circuit selectivity of the system, the connection means 3, 3' are provided with fuses. Hereby it is possible to completely omit the safety fuses of the compensating devices 8, 8' when the fuses of the connection devices 3, 3' are dimensioned such that they will function even in case of compensating equipment short circuit. Hereby fuse guards are not necessarily needed either, because part of the lighting is put out as a result of a capacitor short circuit. This will with certainty be noticed even without a separate alert as the illumination changes.

The solutions described in the examples may further be modified such that the main circuit breaker equipment 1 used comprises the general main circuit breaker equipment of the building being lit up. Hereby it is possible to supply even other equipment and systems in the building over the same main circuit breaker equipment 1. In such a case the main circuit breaker equipment 1 may well be arranged e.g. in the main distribution board of the building instead of the equipment cabin of the lighting system

## Claims

1. A lighting system, comprising
- main circuit breaker equipment (1) and a supply line (2) connected thereto for supplying electric current to the lighting system through the supply line (2) and for disrupting the current supply to the lighting system,
- at least one lighting section (10, 10') connected to the supply line (2), each lighting section comprising:
- groups (17, 17') of light fittings which contain discharge lamps,
- switching means (3, 3') for connecting the lighting section (10, 10') to the supply line (2), the switching means (3, 3') containing fuse elements, and
- wires (4, 4', 5, 5', 16, 16') for supplying electric current from the supply line (2) to the groups (17, 17') of light fittings,
- compensating means for compensating the reactive power of the light fittings, and
- third harmonic filter means (9, 9', 9a) connected to at least one neutral wire of the lighting system, said third harmonic filter means being adapted to filter off the third harmonic from the current advancing in the neutral wire between the at least one lighting section (10, 10') and the system supplying electricity to the lighting system,
**characterized in that**
- the at least one lighting section (10, 10') comprises at least two lighting sections (10, 10') connected to the supply line (2) in parallel,
- the compensating means comprises a separate compensating unit (8, 8') for each lighting section (10, 10'), wherein each compensating unit (8, 8') comprises at least one capacitor and is connected in parallel with the groups (17, 17') of light fittings in order to compensate the reactive power of the groups (17, 17') of light fittings in the lighting section in a centralized manner,
- the lighting system comprises switching control means for stepwise controlling the switching means (3, 3') of the at least two lighting sections (10, 10') during switching on such that the lighting sections (10, 10') are connected to the supply line (2) at different points in time, and
- the lighting system comprises a partial lighting connection wherein the supply to the discharge lamps of at least some of the groups (17, 17') of light fittings is distributed between at least a first lighting section (10) and a second lighting section (10') of the at least two lighting sections (10, 10') by means of a cross-connection such that in such groups (17, 17') of light fittings the voltage supply to at least one discharge lamp is provided over current distributor wires (4) of the first lighting section (10) and the voltage supply to at least one second discharge lamp is provided over current distributor wires (4') of the second lighting section (10').

2. The lighting system of Claim 1, **characterized in that**
- the capacitors in the compensating unit (8, 8') are capacitors of essentially invariable capacitance, and that
- the compensating unit (8, 8') comprises fuse guard devices for monitoring the operation of the capacitors.

3. The lighting system of Claim 1 or 2, **characterized in that** it comprises
- monitoring means for monitoring the operation of the third harmonic filter means (9, 9', 9a), and
- shunt switching means for implementing a connection shunting the third harmonic filter means (9, 9', 9a) on the basis of a failure detected by the monitoring means.

4. The lighting system of any one of the Claims 1 to 3, **characterized in that** the switching control means comprises time relay equipment.

5. The lighting system of any one of the Claims 1 to 4, **characterized in that** each lighting section comprises its own third harmonic filter means (9, 9') which are arranged in the wire connecting the neutral wire of the current distributor wires (4, 4') of the lighting section (10, 10') and the neutral wire of the supply line (2).

6. The lighting system of any one of the claims 1 to 5, **characterized in that** it comprises an equipment cabin (7) containing:
- connectors for providing electrical supply (15) to the equipment cabin (7),
- at least one set of current distributor wires (4, 4') and switching means (1, 3, 3') over which the current distributor wires (4, 4') are connected to the connectors,
- at least two sets of wire protection means (6, 6') connected to the current distributor wires (4, 4'), the wire protection means being provided with supply terminals for the group supply lines (16, 16') of the groups (17, 17') of light fittings,
- at least one compensating unit (8, 8') for the compensation of the reactive power of the groups (17, 17') of light fittings supplied through the current distributor wires (4, 4') and the wire protection means (6, 6'), and
- at least one third harmonic filter unit (9, 9', 9a) connected to the wire connecting the neutral wire of the current distributor wires (4, 4') and the neutral wire of the system supplying electricity to the equipment cabin.

7. The lighting system of Claim 6, **characterized in that** the equipment cabin (7) contains
- at least one separate third harmonic filter unit (9, 9') for each compensating unit,
- monitoring means for monitoring the operation of each third harmonic filter (9, 9'), and
- shunt switching means for each third harmonic filter (9, 9') for performing a connection shunting the filter (9, 9') on the basis of a failure detected by the monitoring means.

8. The lighting system of Claim 6 or 7, **characterized in that** the equipment cabin (7) comprises switching control means, such as time relay equipment, for stepwise controlling the switching means (3, 3') of the lighting sections (10, 10') during switching on such that the lighting sections (10, 10') are connected to the supply line (2) at different points in time.

9. The lighting system of any one of the Claims 6 to 8, **characterized in that** the equipment cabin (7) contains
- at least two separate sets of current distributor wires (4, 4') and switching means (1, 3, 3') via which the current distributor wires (4, 4') are connected to the connectors, and
- wire protection means (6, 6') and compensating units (8, 8') for each of the separate current distributor wires (4, 4'),
whereby it is possible to supply and control several lighting sections (10, 10') over the equipment cabin.

## Patentansprüche

1. Beleuchtungssystem, umfassend
- Hauptstromkreisunterbrechervorrichtungen (1) und eine mit diesen verbundene Versorgungsleitung (2) zur Versorgung des Beleuchtungssystems mit elektrischem Strom durch die Versorgungsleitung (2) und zur Unterbrechung der Stromversorgung des Beleuchtungssystems,
- mindestens einen mit der Versorgungsleitung (2) verbundenen Beleuchtungsabschnitt (10, 10'), wobei jeder Beleuchtungsabschnitt
o Beleuchtungsgruppen (17, 17'), die Entladungslampen enthalten,
o Schaltvorrichtungen (3, 3') zum Anschließen des Beleuchtungsabschnittes (10, 10') an die Versorgungsleitung (2), wobei die Schaltvorrichtungen (3, 3') Sicherungselemente enthalten, und
o Leiter (4, 4', 5, 5', 16, 16') zur Versorgung von elektrischem Strom aus der Versorgungsleitung (2) zu den Beleuchtungsgruppen (17, 17') umfasst,
- Kompensierungsvorrichtungen zum Kompensieren der reaktiven Kraft der Beleuchtungen, und
- Filtervorrichtungen (9, 9', 9a) der dritten Harmonischen, verbunden mit mindestens einem neutralen Leiter des Beleuchtungssystems, wobei die genannten Filtervorrichtungen der dritten Harmonischen angeordnet sind, die dritte Harmonische aus dem Strom, der in dem neutralen Leiter zwischen dem mindestens einen Beleuchtungsabschnitt (10, 10') und dem System fortschreitet, das das Beleuchtungssystem mit Elektrizität versorgt, zu filtern,
**dadurch gekennzeichnet, dass**
- der mindestens eine Beleuchtungsabschnitt (10, 10') mindestens zwei mit der Versorgungsleitung (2) parallelgeschaltete Beleuchtungsabschnitte (10, 10') umfasst,
- die Kompensierungsvorrichtung eine separate Kompensierungseinheit (8, 8') für jeden Beleuchtungsabschnitt (10, 10') umfasst, wobei jede Kompensierungseinheit (8, 8') mindestens einen Kondensator umfasst und mit den Beleuchtungsgruppen (17, 17') parallelgeschaltet ist, um die reaktive Kraft der Beleuchtungsgruppen (17, 17') in dem Beleuchtungsabschnitt auf eine zentralisierte Art zu kompensieren,
- das Beleuchtungssystem Schaltsteuervorrichtungen zur schrittweisen Steuerung der Schaltvorrichtungen (3, 3') der mindestens zwei Beleuchtungsabschnitte (10, 10') während einer Einschaltposition umfasst, so dass die Beleuchtungsabschnitte (10, 10') zu verschiedenen Zeitpunkten mit der Versorgungsleitung (2) verbunden sind, und
- das Beleuchtungssystem eine Teilbeleuchtungsverbindung umfasst, wobei die Versorgung der Entladungslampen von mindestens einigen der Beleuchtungsgruppen (17, 17') zwischen mindestens einem ersten Beleuchtungsabschnitt (10) und einem zweiten Beleuchtungsabschnitt (10') der mindestens zwei Beleuchtungsabschnitte (10, 10') mit Hilfe einer Kreuzverbindung distribuiert wird, so dass in solchen Beleuchtungsgruppen (17, 17') die Spannungsversorgung zu mindestens einer Entladungslampe über Stromverteilungsleitungen (4) des ersten Beleuchtungsabschnittes (10) realisiert ist, und die Spannungsversorgung zu mindestens einer zweiten Entladungslampe über Stromverteilungsleitungen (4') des zweiten Beleuchtungsabschnittes (10') realisiert ist.

2. Beleuchtungssystem nach Anspruch 1, **dadurch gekennzeichnet, dass**
- die Kondensatoren in der Kompensierungseinheit (8, 8') Kondensatoren mit im Wesentlichen unveränderlicher Kapazitanz sind, und dass
- die Kompensierungseinheit (8, 8') Sicherungsschutzvorrichtungen zur Überwachung der Tätigkeit der Kondensatoren umfasst.

3. Beleuchtungssystem nach Anspruch 1 oder 2, **dadurch gekennzeichnet, dass** es
- Überwachungsvorrichtungen zur Überwachung der Tätigkeit der Filtervorrichtungen (9, 9', 9a) für die dritte Harmonische, und
- Shuntschaltvorrichtungen zum Implementieren einer Shuntverbindung der Filtervorrichtungen (9, 9', 9a) für die dritte Harmonische auf Basis eines von den Überwachungsvorrichtungen festgestellten Ausfalls umfasst.

4. Beleuchtungssystem nach einem der Ansprüche 1 bis 3, **dadurch gekennzeichnet, dass** die Schaltsteuervorrichtungen Zeitrelaisapparate umfassen.

5. Beleuchtungssystem nach einem der Ansprüche 1 bis 4, **dadurch gekennzeichnet, dass** jeder Beleuchtungsabschnitt eigene Filtervorrichtungen (9, 9') für die dritte Harmonische umfasst, welche in der Leitung angeordnet sind, die den neutralen Leiter in den Stromverteilungsleitungen (4, 4') des Beleuchtungsabschnittes (10, 10') mit dem neutralen Leiter der Versorgungsleitung (2) verbindet.

6. Beleuchtungssystem nach einem der Ansprüche 1 bis 5, **dadurch gekennzeichnet, dass** es einen Vorrichtungsraum (7) umfasst, der
- Anschlüsse zur Realisierung der elektrischen Versorgung (15) in den Vorrichtungsraum (7),
- mindestens einen Satz Stromverteilungsleitungen (4, 4') und Schaltvorrichtungen (1, 3, 3'), über welche die Stromverteilungsleitungen (4, 4') mit den Anschlüssen verbunden sind,
- mindestens zwei Leitungsschutzapparate (6, 6'), die mit den Stromverteilungsleitungen (4, 4') verbunden sind, wobei die Leitungsschutzapparate mit Versorgungspolen für die Gruppenversorgungsleitungen (16, 16') der Beleuchtungsgruppen (17, 17') ausgestattet sind,
- mindestens eine Kompensierungseinheit (8, 8') für die Kompensierung der reaktiven Kraft der Beleuchtungsgruppen (17, 17'), die durch die Stromverteilungsleitungen (4, 4') und die Leitungsschutzapparate (6, 6') versorgt werden, und
- mindestens eine Filtereinheit (9, 9', 9a) für die dritte Harmonische, die an den Leiter angeschlossen ist, der den neutralen Leiter der Stromverteilungsleitungen (4, 4') und den neutralen Leiter des Systems, das den Vorrichtungsraum mit Elektrizität versorgt, verbunden ist,
enthält.

7. Beleuchtungssystem nach Anspruch 6, **dadurch gekennzeichnet, dass** der Vorrichtungsraum (7)
- pro Kompensierungseinheit mindestens eine separate Filtereinheit (9, 9') für die dritte Harmonische,
- Überwachungsvorrichtungen zur Überwachung der Tätigkeit eines jeden Filters (9, 9') für die dritte Harmonische, und
- Shuntschaltungsvorrichtungen für jeden Filter (9, 9') für die dritte Harmonische zur Realisierung einer Shuntverbindung des Filters (9, 9') auf Basis eines von den Überwachungsvorrichtungen angezeigten Ausfalls
umfasst.

8. Beleuchtungssystem nach Anspruch 6 oder 7, **dadurch gekennzeichnet, dass** der Vorrichtungsraum (7) Schaltsteuervorrichtungen, wie Zeitrelaisapparate, umfasst, zur schrittweisen Steuerung der Schaltvorrichtungen (3, 3') der Beleuchtungsabschnitte (10, 10') während einer Einschaltposition, so dass die Beleuchtungsabschnitte (10, 10') zu verschiedenen Zeitpunkten mit der Versorgungsleitung (2) verbunden sind.

9. Beleuchtungssystem nach einem der Ansprüche 6 bis 8, **dadurch gekennzeichnet, dass** der Vorrichtungsraum (7)
- mindestens zwei separate Sätze von Stromverteilungsleitungen (4, 4') und Schaltvorrichtungen (1, 3, 3'), über welche die Stromverteilungsleitungen (4, 4') mit den Anschlüssen verbunden sind, und
- Leitungsschutzapparate (6, 6') und Kompensierungseinheiten (8, 8') für jede der separaten Stromverteilungsleitungen (4, 4') umfasst,
wobei eine Vielzahl von Beleuchtungsabschnitten (10, 10') über den Vorrichtungsraum versorgbar und steuerbar ist.

## Revendications

1. Système d'éclairage, comprenant :
- un équipement de disjoncteur de circuit principal (1) et une ligne d'alimentation (2) connectée à celui-ci pour fournir un courant électrique au système d'éclairage par l'intermédiaire de la ligne d'alimentation (2) et pour interrompre l'alimentation en courant du système d'éclairage,
- au moins une section d'éclairage (10, 10') connectée à la ligne d'alimentation (2), chaque section d'éclairage comprenant :
- des groupes (17, 17') de luminaires qui contiennent des lampes à décharge,
- des moyens de commutation (3, 3') pour connecter la section d'éclairage (10, 10') à la ligne d'alimentation (2), les moyens de commutation (3, 3') contenant des éléments de fusibles, et
- des fils (4, 4', 5, 5', 16, 16') pour fournir un courant électrique de la ligne d'alimentation (2) aux groupes (17, 17') de luminaires,
- des moyens de compensation pour compenser la puissance réactive des luminaires, et
- des moyens de filtrage de troisième harmonique (9, 9', 9a) connectés à au moins un fil neutre du système d'éclairage, lesdits moyens de filtrage de troisième harmonique étant adaptés pour éliminer par filtrage la troisième harmonique du courant avançant dans le fil neutre entre l'au moins une section d'éclairage (10, 10') et le système fournissant de l'électricité au système d'éclairage, **caractérisé en ce que**
- l'au moins une section d'éclairage (10, 10') comprend au moins deux sections d'éclairage (10, 10') connectées à la ligne d'alimentation (2) en parallèle,
- les moyens de compensation comprennent une unité de compensation séparée (8, 8') pour chaque section d'éclairage (10, 10'), dans lequel chaque unité de compensation (8, 8') comprend au moins un condensateur et est connectée en parallèle avec les groupes (17, 17') de luminaires afin de compenser la puissance réactive des groupes (17, 17') de luminaires dans la section d'éclairage de manière centralisée,
- le système d'éclairage comprend des moyens de commande de commutation pour commander progressivement les moyens de commutation (3, 3') des au moins deux sections d'éclairage (10, 10') au cours de l'allumage de sorte que les sections d'éclairage (10, 10') soient connectées à la ligne d'alimentation (2) à des instants différents, et
- le système d'éclairage comprend une connexion d'éclairage partiel dans lequel l'alimentation des lampes à décharge d'au moins certains des groupes (17, 17') de luminaires est distribuée entre au moins une première section d'éclairage (10) et une seconde section d'éclairage (10') des au moins deux sections d'éclairage (10, 10') au moyen d'une connexion croisée de sorte que, dans de tels groupes (17, 17') de luminaires, l'alimentation en tension d'au moins une lampe à décharge soit fournie par l'intermédiaire de fils distributeurs de courant (4) de la première section d'éclairage (10) et l'alimentation en tension d'au moins une seconde lampe à décharge soit fournie par l'intermédiaire de fils distributeurs de courant (4') de la seconde section d'éclairage (10').

2. Système d'éclairage selon la revendication 1, **caractérisé en ce que**
- les condensateurs dans l'unité de compensation (8, 8') sont des condensateurs de capacité essentiellement invariable, et que
- l'unité de compensation (8, 8') comprend des dispositifs de protection à fusible pour surveiller le fonctionnement des condensateurs.

3. Système d'éclairage selon la revendication 1 ou 2, **caractérisé en ce qu'**il comprend :
- des moyens de surveillance pour surveiller le fonctionnement des moyens de filtrage de troisième harmonique (9, 9', 9a), et
- des moyens de commutation shunt pour réaliser une connexion dérivant les moyens de filtrage de troisième harmonique (9, 9', 9a) sur la base d'une défaillance détectée par les moyens de surveillance.

4. Système d'éclairage selon une quelconque des revendications 1 à 3, **caractérisé en ce que** les moyens de commande de commutation comprennent un équipement de relais temporel.

5. Système d'éclairage selon une quelconque des revendications 1 à 4, **caractérisé en ce que** chaque section d'éclairage comprend ses propres moyens de filtrage de troisième harmonique (9, 9') qui sont agencés dans le fil connectant le fil neutre des fils distributeurs de courant (4, 4') de la section d'éclairage (10, 10') et le fil neutre de la ligne d'alimentation (2).

6. Système d'éclairage selon une quelconque des revendications 1 à 5, **caractérisé en ce qu'**il comprend une armoire d'équipement (7) contenant :
- des connecteurs pour fournir une alimentation électrique (15) à l'armoire d'équipement (7),
- au moins un jeu de fils distributeurs de courant (4, 4') et de moyens de commutation (1, 3, 3') par l'intermédiaire desquels les fils distributeurs de courant (4, 4') sont connectés aux connecteurs,
- au moins deux jeux de moyens de protection de fil (6, 6') connectés aux fils distributeurs de courant (4, 4'), les moyens de protection de fil étant pourvus de bornes d'alimentation pour les lignes d'alimentations (16, 16') des groupes (17, 17') de luminaires,
- au moins une unité de compensation (8, 8') pour la compensation de la puissance réactive des groupes (17, 17') de luminaires alimentés par l'intermédiaire des fils distributeurs de courant (4, 4') et des moyens de protection de fil (6, 6'), et
- au moins une unité de filtrage de troisième harmonique (9, 9', 9a) connectée au fil connectant le fil neutre des fils distributeurs de courant (4, 4') et le fil neutre du système fournissant de l'électricité à l'armoire d'équipement.

7. Système d'éclairage selon la revendication 6, **caractérisé en ce que** l'armoire d'équipement (7) continent :
- au moins une unité séparée de filtrage de troisième harmonique (9, 9') pour chaque unité de compensation,
- des moyens de surveillance pour surveiller le fonctionnement de chaque filtre de troisième harmonique (9, 9'), et
- des moyens de commutation shunt pour chaque filtre de troisième harmonique (9, 9') pour réaliser une connexion dérivant le filtre (9, 9') sur la base d'une défaillance détectée par les moyens de surveillance.

8. Système d'éclairage selon la revendication 6 ou 7, **caractérisé en ce que** l'armoire d'équipement (7) comprend des moyens de commande de commutation, tels qu'un équipement de relais temporel, pour commander progressivement les moyens de commutation (3, 3') des sections d'éclairage (10, 10') au cours de l'allumage de sorte que les sections d'éclairage (10, 10') soient connectées à la ligne d'alimentation (2) à des instants différents.

9. Système d'éclairage selon une quelconque des revendications 6 à 8, **caractérisé en ce que** l'armoire d'équipement (7) contient :
- au moins deux jeux séparés de fils distributeurs de courant (4, 4') et de moyens de commutation (1, 3, 3') par l'intermédiaire desquels les fils distributeurs de courant (4, 4') sont connectés aux connecteurs, et
- des moyens de protection de fil (6, 6') et des unités de compensation (8, 8') pour chacun des fils distributeurs de courant séparés (4, 4'),
moyennant quoi il est possible d'alimenter et de commander plusieurs sections d'éclairage (10, 10') par l'intermédiaire de l'armoire d'équipement.
